# EUROPÄISCHE PATENTSCHRIFT

(11) **EP 3 940 190 B1**
(45) Veröffentlichungstag und Bekanntmachung des Hinweises auf die Patenterteilung: **27.09.2023**
(21) Anmeldenummer: 21176763.7
(22) Anmeldetag: 12.02.2010
(51) Int. Cl.: E21B 3/02, E21B 21/02, F16C 19/38, F16C 19/49, F16C 19/50, F16C 25/08, F16C 33/60

(54) **BOHRANLAGEN-LAGERANORDNUNG**
BEARING ARRANGEMENT FOR A DRILLING ASSEMBLY
DISPOSITIF DE PALIER POUR INSTALLATIONS DE FORAGE

(30) Priorität: 25.05.2009 EP 09006942
(43) Veröffentlichungstag der Anmeldung: 19.01.2022
(62) Teilanmeldung aus: 10001469.5
(73) Patentinhaber: Aktiebolaget SKF, 415 50 Göteborg (SE)
(72) Erfinder: Derrer, Siegfried, 91315 Höchstadt (DE); Kirsch, Reinhard, 91315 Höchstadt (DE); Pickel, Edgar, 97334 Sommerach (DE)
(74) Vertreter: Kohl, Thomas

(56) Entgegenhaltungen:
- CA-A- 450 106
- GB-A- 1 088 257
- GB-A- 2 083 572
- US-A- 2 195 501
- US-A- 4 815 546

## Beschreibung

Die Erfindung betrifft eine Bohranlagen-Lageranordnung, die einen Grundkörper mit einer Aufhängung sowie eine Aufnahme für ein Bohrgestänge aufweist, wobei zwischen dem Grundkörper und der Aufnahme für das Bohrgestänge eine Lagerung angeordnet ist, um die Aufnahme relativ zum Grundkörper radial und axial zu lagern und das Bohrgestänge relativ zum Grundkörper mit einem Antriebmittel um eine Achse zu drehen.

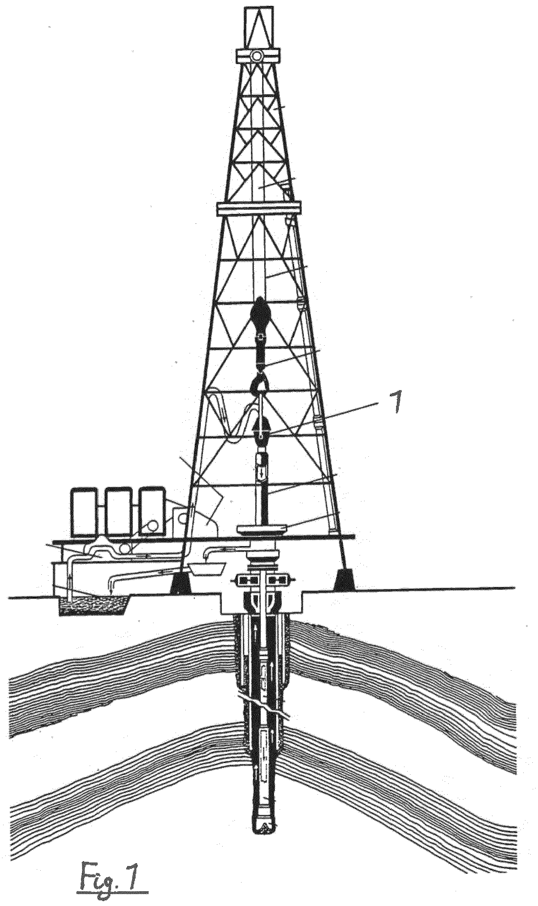

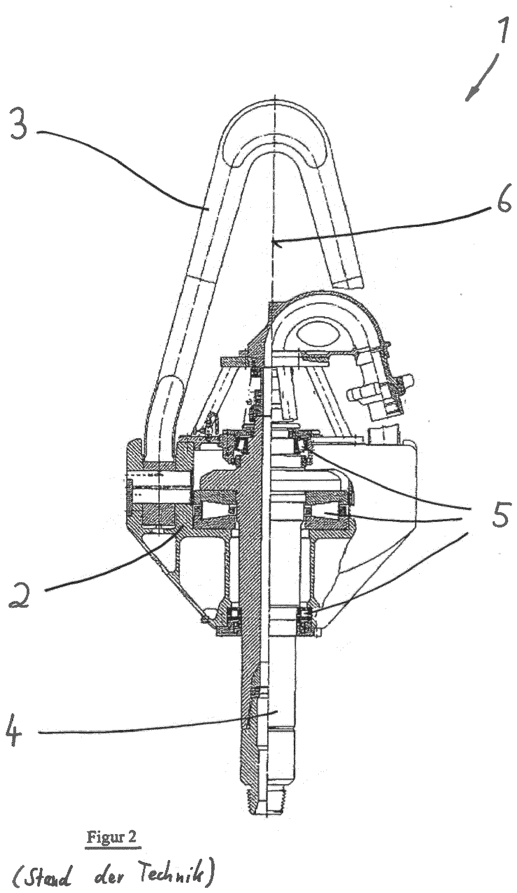

Bohranlagen-Lageranordnungen dieser Art sind im Stand der Technik hinlänglich bekannt. In einer Bohranlage, wie sie in Fig. 1 skizziert ist, wird zumeist eine solche Anordnung eingesetzt, die meist auch als Spülkopf (im Englischen als "Swivel") bezeichnet wird. Sie ist in Fig. 1 mit der Bezugsziffer 1 markiert. Eine solche Bohranlagen-Lageranordnung nach dem Stand der Technik ist in Fig. 2 im Detail zu sehen. Die Lageranordnung 1 hat hiernach einen Grundkörper 2, der eine Aufhängung 3 (Haken) hat, an der ein Seil eines Hebewerks angreifen kann, um die Anordnung 1 anzuheben und abzusenken. Im unteren Bereich der Lageranordnung 1 ist eine Aufnahme 4 für ein Bohrgestänge angeordnet. Der Antrieb des Bohrgestänges erfolgt zumeist separat. Alternativ kann der Antrieb des Bohrgestänges auch in den Spülkopf integriert werden; in diesem Falle wird von einem "top drive" gesprochen. In jedem Falle ist eine Lagerung 5 erforderlich, die eine Rotation um die Achse 6 der Aufnahme 5 mit dem Bohrgestänge relativ zum Grundkörper 2 ermöglicht.

Die Aufnahme der Haupt-Axial-Lasten, die beim Bohrvorgang entstehen, erfolgt im Stand der Technik meist durch Axial-Kegelrollenlager. Bei wechselnden Axiallasten kann eine Gehäusescheibe durch Federn vorgespannt werden. Alternativ zu den Kegelrollenlagern können auch Axial-Pendelrollenlager (radial frei) eingesetzt werden. In manchen Fällen wird das Axial-Pendelrollenlager nicht radial freigesetzt, so dass es in diesem Falle auch radiale Lasten übertragen kann. Zur Aufnahme der Radiallasten, die beim Bohrvorgang entstehen, werden beispielsweise zwei Radiallager (z. B. Zylinderrollenlager) im oberen und unteren Bereich eingesetzt.

In Fig. 2 ist für die dort skizzierte vorbekannte Lösung vorgesehen, dass neben dem Axial-Kegelrollenlager im mittleren Bereich zur Aufnahme der Haupt-Axiallasten im unteren Bereich ein Zylinderrollenlager als Radiallager eingesetzt wird; im oberen Bereich ist ein Kegelrollenlager eingesetzt, das sowohl radiale als auch in geringem Umfang axiale Lasten übertragen kann.

Alternativ wäre hier auch ein Axialpendelrollenlager möglich, das nicht radial freigesetzt ist und so Radiallasten übertragen kann. Bekannt sind auch gegenseitig angestellte Lagerungen, beispielsweise Axialpendelrollenlager und/oder Kegelrollenlager. Zur Aufnahme der Gegen-Axiallasten kann auch ein Axial-Zylinderrollenlager zum Einsatz kommen, wobei dann im oberen Bereich ein Radialzylinderrollenlager zum Einsatz kommt, das die Radiallast übernimmt. Alle bisher bekannten und üblichen Lagerungsprinzipien bei gattungsgemäßen Bohranlagen-Lageranordnungen basieren auf sogenannten "aufgelösten Lagerungen". Dies bedeutet, dass die Lagerung mit mehreren mehr oder weniger standardisierten Wälzlagern erfolgt.

Nachteilig ist bei einer solchen Lösung, dass ein relativ ausladender Aufbau der Lageranordnung gegeben ist, der nicht sehr kompakt ist. Demgemäß ist die Bauhöhe nachteilig groß. Ferner ist die Montage einer solchen Lageranordnung relativ aufwändig, wobei insbesondere die genaue Einstellung der verschiedenen Lager erforderlich ist. Die US 4 815 546 A bildet weiteren Stand der Technik, die eine Bohranlagen-Lageranordnung offenbart, die aus einer Vielzahl von Einzelelementen zusammengesetzt ist.

Der Erfindung liegt die **Aufgabe** zugrunde, eine gattungsgemäße Bohranlagen-Lageranordnung so fortzubilden, dass die genannten Nachteile vermieden werden. Es soll also eine Lageranordnung bereit gestellt werden, die sich durch einen besonders kompakten Aufbau und namentlich durch eine geringe Bauhöhe sowie durch einen möglichst geringen Außendurchmesser auszeichnet. Weiterhin soll die Anordnung leicht zu montieren sein, wobei insbesondere der Einstellaufwand der Lagerung gering bleiben soll.

Die Aufgabewird durch den Gegenstand des Patentanspruchs 1 gelöst.

Eine der Reihen der Wälzkörper kann dabei ausschließlich zur Übertragung von in Richtung der Achse wirkenden Kräften (Axialkräften) ausgebildet und angeordnet sein.

Sowohl der Lagerinnenring als auch der Lageraußenring kann einteilig ausgebildet sein.

Bevorzugt ist die genannte Lagerung die einzige Lagerung der Bohranlagen-Lageranordnung.

Zumindest einer der Lagerringe kann mindestens ein Gewinde zur Verschraubung mit einem Anbauteil aufweisen.

Eine der Reihen Wälzkörper sind - als Kegelrollen - gemäß einer bevorzugten Ausführungsform der Erfindung so angeordnet, dass sie ausschließlich in Richtung der Achse wirkende Kräfte übertragen können.

Eine der Reihen Wälzkörper können auch Zylinderrollen sein, wobei diese so angeordnet sind, dass sie ausschließlich radiale Kräfte übertragen können.

Eine der Reihen Wälzkörper kann zwischen den Laufbahnen so angeordnet sein, dass sie sowohl axiale als auch radiale Kräfte übertragen können. In diesem Falle kann vorgesehen werden, dass die sowohl axiale als auch radiale Kräfte übertragenden Wälzkörper unter einem Winkel zur Achse der Lageranordnung angeordnete Zylinderrollen, Kegelrollen oder Kugeln sind.

Vorgesehen werden kann weiterhin, dass sowohl der Lagerinnenring als auch der Lageraußenring mit in Richtung der Achse verlaufenden Bohrungen versehen sind, mittels derer sie an einem Anbauteil festgelegt werden können.

Der Lagerinnenring oder Lageraußenring kann ferner eine Verzahnung zum Eingriff eines Antriebsritzels aufweisen.

Die Bohranlagen-Lageranordnung ist bevorzugt als Bohrkopf ausgebildet, wobei ihre Drehachse bei bestimmungsgemäßem Gebrauch vorzugsweise vertikal angeordnet ist.

Die vorgeschlagene Ausgestaltung einer Bohranlagen-Lageranordnung macht es daher möglich, dass mit einer angeschraubten Lagerungseinheit sämtliche Kräfte aufgenommen werden können, die beim Bohrvorgang zu übertragen sind.

Die Axiallasten können durch ein oder durch zwei Axiallager aufgenommen werden, gleichermaßen die Momentenbelastung der Lageranordnung. Die Radiallasten nimmt ein Radiallager auf.

Grundsätzlich ist auch ein Axial-Pendelrollenlager möglich. Die Welle (Aufnahme für das Bohrgestänge) kann mit dem sich drehenden Innenring verschraubt werden. Das Gehäuse (Grundkörper) der Lageranordnung kann mit dem Außenring bzw. mit den Außenringen verschraubt werden.

Sowohl der Innenring als auch der Außenring können auch einteilig ausgeführt sein, wofür in diesem Falle Montageöffnungen für die Zuführung der Wälzkörper vorgesehen werden.

In vorteilhafter Weise ergibt sich somit eine kompakte Lagerungseinheit mit einer deutlich reduzierten Bauhöhe.

Auch die Montage gestaltet sich relativ einfach und kostengünstig, da die Lagerringe lediglich mit den Anbauteilen verschraubt werden müssen. Es ist insbesondere keine individuelle Einstellung der Einzellager erforderlich.

Die Wellen und die Gehäusetoleranzen haben keinen Einfluss auf die Lagerluft.

Demgemäß kann ein Ersatz mehrerer Lager durch eine einzige kompakte Lagereinheit erfolgen.

Die bevorzugte Anwendung des vorgeschlagenen Konzepts ist eine Vertikalbohranlage. Neben dem klassischen Bohren eines Bohrlochs kommt dabei auch das sog. "Raise-Verfahren" in Betracht, bei dem im Falle der vertikalen Anwendung ein Bohrkopf von unten nach oben gezogen wird.

Ferner ist es aber auch möglich, Anwendungen mit horizontaler Bohrrichtung erfindungsgemäß auszustatten, z. B. Tunnelvortriebsmaschinen.

In der Zeichnung sind Ausführungsbeispiele der Erfindung dargestellt. Es zeigen:
Fig. 1 eine Darstellung einer Bohranlage,
Fig. 2 eine Bohranlagen-Lageranordnung gemäß dem Stand der Technik, wobei eine vorbekannte Lagerung zum Einsatz kommt,
Fig. 3 den Radialschnitt durch die Lagerung der Bohranlagen-Lageranordnung gemäß einer nicht von der Erfindung umfassten Ausführungsform,
Fig. 4 in der Darstellung gemäß Fig. 3 eine Ausführungsform gemäß der Erfindung,
Fig. 5a bis Fig. 5f in schematischer Darstellung verschiedene Ausgestaltungen der erfindungsgemäßen Lagerung mit einteiligem Lageraußenring und zweiteiligem Lagerinnenring,
Fig. 6a bis Fig. 6h in schematischer Darstellung verschiedene nicht von der Erfindung umfasste Ausgestaltungen der Lagerung mit einteiligem Lagerinnenring und zweiteiligem Lageraußenring oder mit einteiligem Lagerinnenring und einteiligem Lageraußenring und
Fig. 7a bis Fig. 7e in schematischer Darstellung verschiedene weitere Ausgestaltungen der erfindungsgemäßen Lagerung mit einteiligem Lagerinnenring und zweiteiligem Lageraußenring.

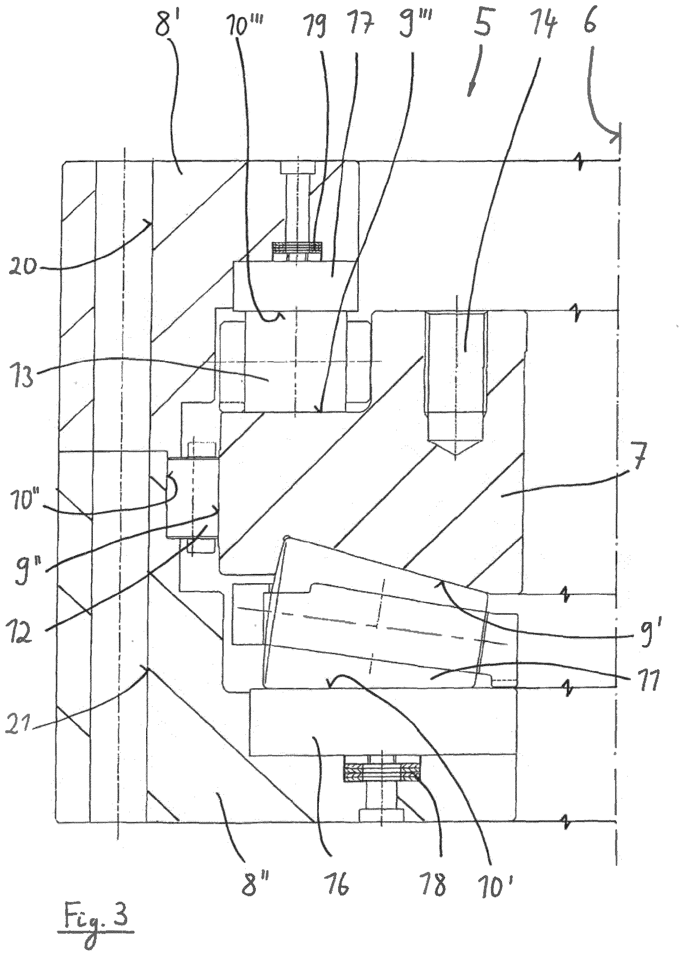

In Fig. 3 ist eine Lagerung 5 dargestellt, mit der die Aufnahme (4; s. Fig. 2) der Bohrkopf-Lageranordnung 1 relativ zu dem Grundkörper 2 drehbar gelagert ist. Im Betrieb dreht die Aufnahme 4 um die Achse 6, die vertikal angeordnet ist.

Die Lagerung 5 weist einen einteiligen Lagerinnenring 7 sowie einen zweiteiligen Lageraußenring 8', 8" auf. Die beiden Teile 8', 8" des Lagerau-ßenrings sind mittels einer Schraubverbindung verbunden; zu erkennen sind diesbezüglich Durchgangsbohrungen 20 und 21 für eine nicht dargestellte Schraube.

Wesentlich ist, dass sowohl in dem Lagerinnenring 7 als auch in dem Lageraußenring 8', 8" mindestens zwei - vorliegend: drei - Laufbahnen 9', 9" und 9‴ in den Lagerinnenring 7 sowie 10', 10" und 10‴ in den Lageraußenring 8', 8" eingearbeitet sind. Dabei sind mindestens zwei - vorliegend: drei - Reihen Wälzkörper 11, 12 und 13 zwischen den Laufbahnen 9', 9", 9‴ und 10', 10", 10‴ angeordnet.

Das Teillager, das durch die Wälzkörper 11 gebildet wird, ist als Axial-Kegelrollenlager ausgebildet und dafür vorgesehen, die Axialkräfte zu übertragen, die während des Bohrvorgangs entstehen. Im Ausführungsbeispiel gemäß Fig. 3 ist auch das Teillager mit den Wälzkörpern 13 als reines Axiallager ausgebildet, hier als Zylinderrollenlager. Indes ist das Teillager mit den Wälzkörpern 12 als reines Radiallager ausgeführt, d. h. als Zylinderrollenlager, das ausschließlich Radialkräfte übertragen kann.

Der Einsatz eines Kegelrollenlagers (mit den Wälzkörpern 11) hat den besonderen Vorteil, dass der Außendurchmesser des Lagers (bei gleicher Tragfähigkeit) geringer sein kann als im Falle eines Zylinderrollenlagers, was sich durch die kegelige Kontur der Wälzkörper ergibt, d. h. diese werden zur Drehachse hin schmaler. Weiterhin kommt es insbesondere bei hohen Drehzahlen im Falle der Verwendung eines Kegelrollenlagers zu weniger Schlupf als bei einem Zylinderrollenlager, was in vorteilhafter Weise ein geringere Erwärmung des Lagers und auch geringeren Verschleiß zur Folge hat.

Für die Befestigung des Innenrings 7 sind Gewinde 14 (von denen nur eines zu sehen ist) in den Innenring 7 eingearbeitet. Im Ausführungsbeispiel ist weiter vorgesehen, dass Laufbahnringe 16 und 17 in den Lageraußenring 8' bzw. 8" in entsprechende Ringnuten in denselben eingesetzt sind, an denen die Wälzkörper 11 und 13 anlaufen. Zwischen den Laufbahnringen 16 und 17 und den diese tragenden Lageraußenringen 8' bzw. 8" sind Federelemente 18 bzw. 19 wirksam angeordnet, die in Richtung der Achse 6 eine Federkraft erzeugen können.

Die drei Teillagerfunktionen durch die Wälzkörperreihen 11, 12 und 13 werden also in sehr kompakter Weise realisiert, indem der Lagerinnenring 7 an benachbarten Flächen die jeweiligen Laufbahnen für diese Wälzkörperreihen ausbildet.

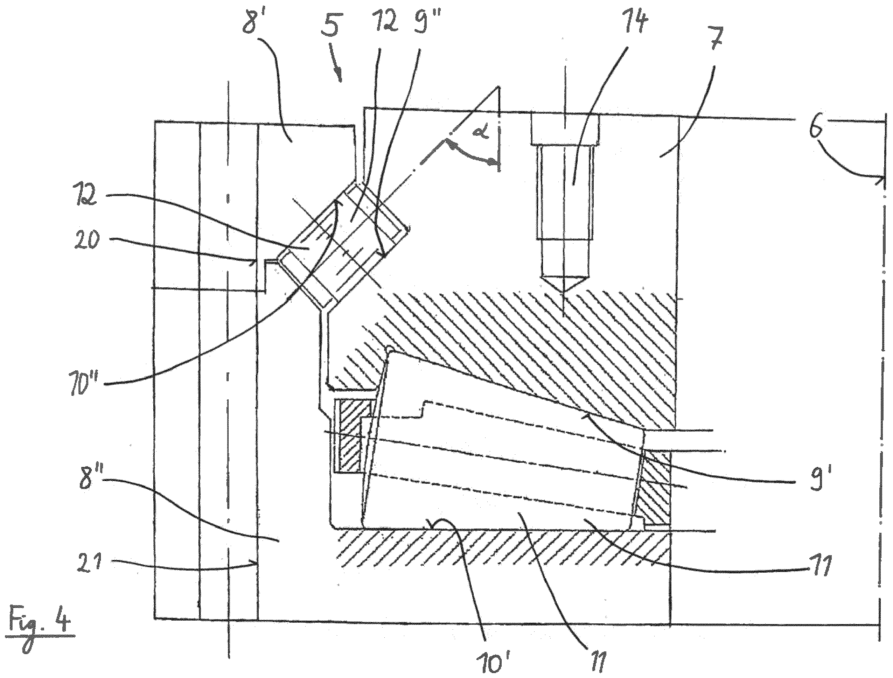

In Fig. 4 ist eine alternative Ausgestaltung der Lagerung 5 gemäß der Erfindung skizziert. Auch hier ist wieder ein Axial-Kegelrollenlager durch Wälzkörper 11 ausgebildet, wozu der einteilige Lagerinnenring 7 eine Laufbahn 9' und der zweiteilige Lageraußenring 8', 8" im Teil 8" eine Laufbahn 10' aufweist. Das Kegelrollenlager mit den Wälzkörpern 11 ist dabei wiederum genauso wie in Fig. 3 als reines Axiallager ausgeführt, d. h. es kann keine Radialkräfte übertragen. Daneben ist für eine Übertragung von kombinierten Radial- und Axiallasten ein zweites Teillager mit Wälzkörpern 12 vorgesehen, wobei die Innenringlaufbahn 9" direkt in den Innenring 7 eingearbeitet ist, während die korrespondierende Außenringlaufbahn 10" in den Lageraußenring 8' eingearbeitet ist.

Dabei ist das Teillager mit den Wälzkörpern 12 als Zylinderrollenlager ausgeführt, wobei allerdings die Achse der Zylinderrollen unter einem Winkel α zur Achse 6 angeordnet ist. Dieser Winkel beträgt im Ausführungsbeispiel etwa 45°; er kann aber auch andere Werte annehmen.

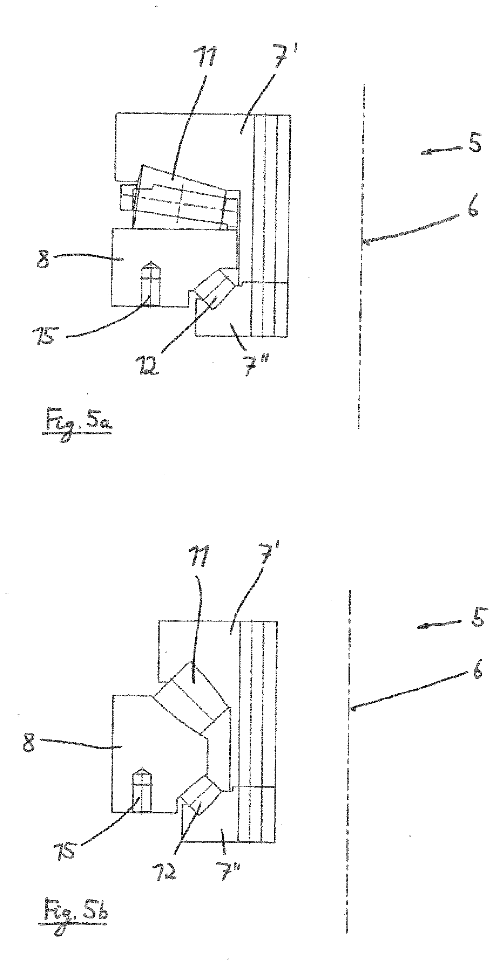

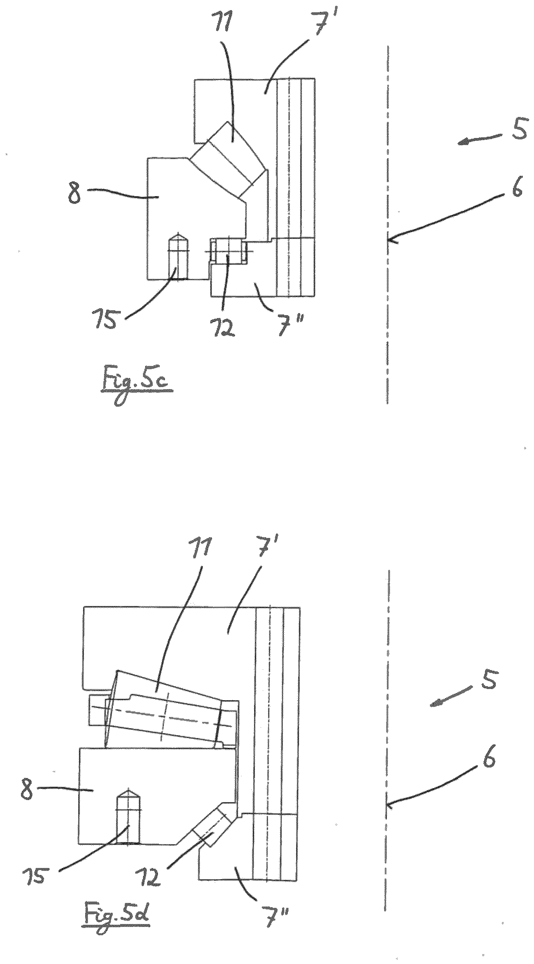

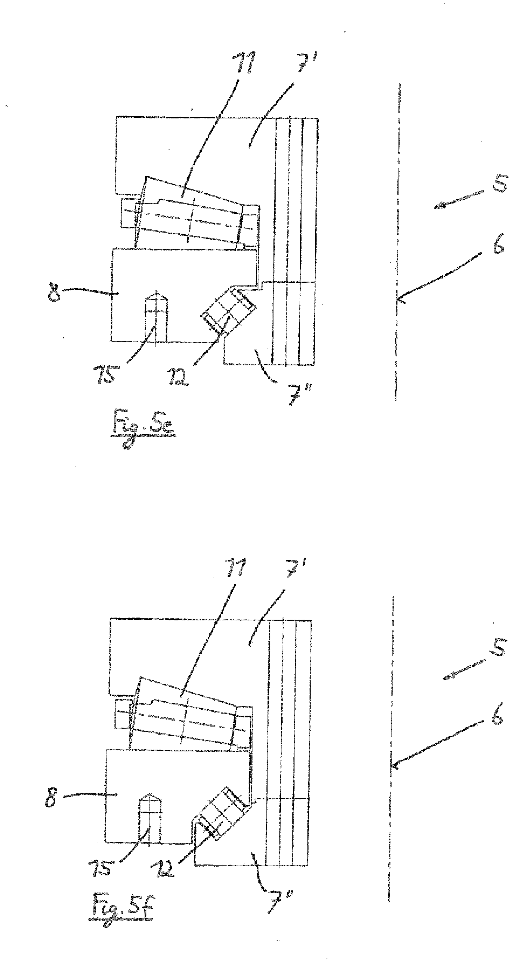

In den Figuren 5, 6 und 7 sind schematisch verschiedene Alternativlösungen der vorgeschlagenen Lagerung 5 skizziert.

In Fig. 5a bis 5f sind jeweils Lösungen dargestellt, bei denen ein zweiteiliger Lagerinnenring 7', 7" zum Einsatz kommt, wobei der Lagerau-βenring 8 einteilig ausgeführt ist. Als Axial-Hauptlager kommt fast überall ein Kegelrollenlager zum Einsatz; in den Figuren 5b und 5c wird hier jedoch alternativ ein Axial-Pendelrollenlager (mit den Wälzkörpern 11) verwendet.

Daneben kommt je ein weiteres Lager (mit den Wälzkörpern 12) zum Einsatz. In Fig. 5a und Fig. 5b ist es ein kombiniertes Axial- und Radiallager in Form eines Pendelrollenlagers. In Fig. 5c ist es ein reines Axial-Zylinderrollenlager, da das Pendelrollenlager mit den Wälzkörpern 11 auch Radialkräfte übertragen kann. In Fig. 5d ist es ein Kegelrollenlager, in den Figuren 5e und 5f ein Zylinderrollenlager, das kombiniert Axial- und Radialkräfte übertragen kann, da die Achse der Zylinderrollen 12 unter einem Winkel (von ca. 45°) zur Achse 6 steht.

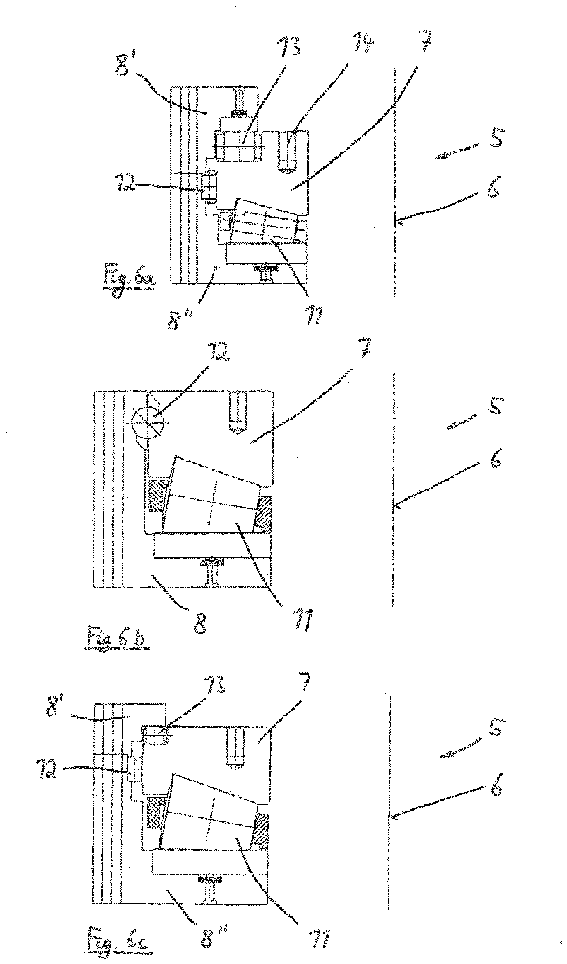

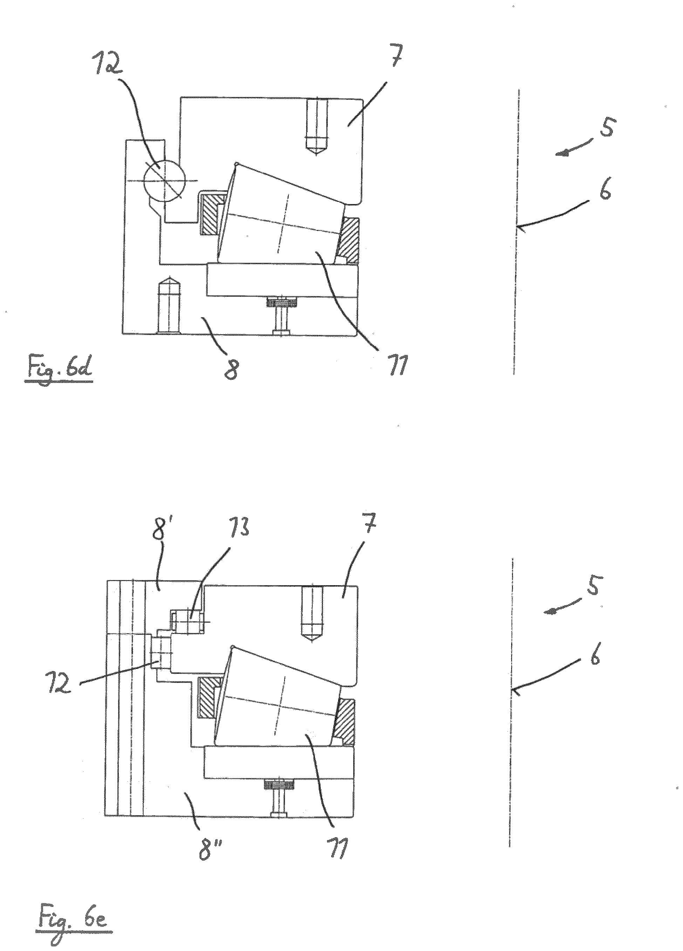

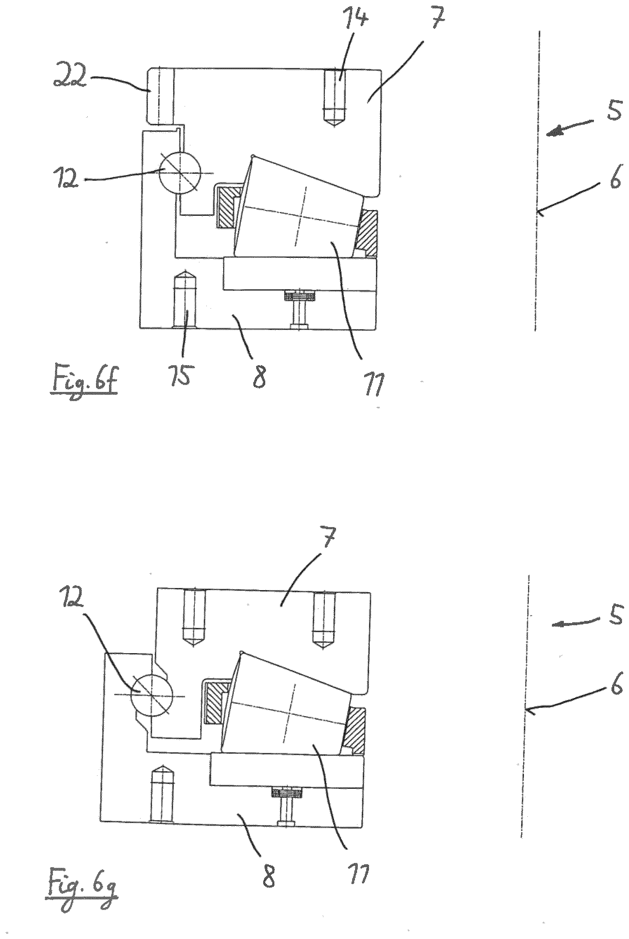

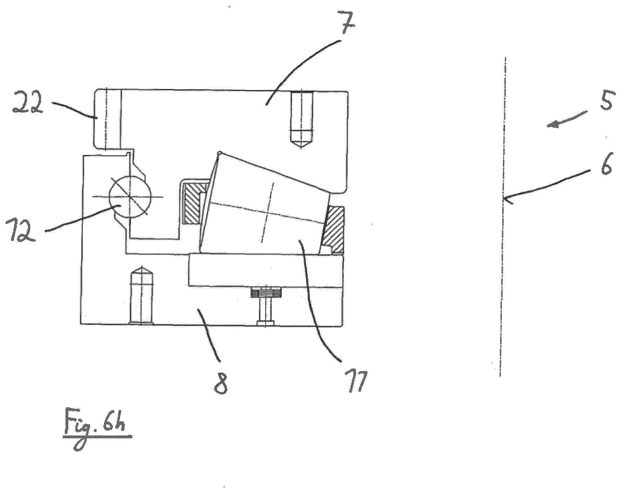

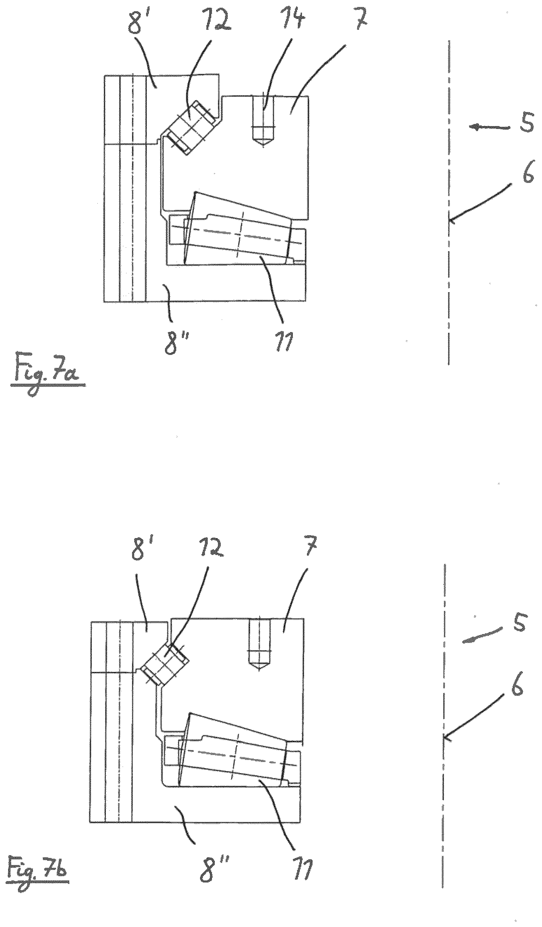

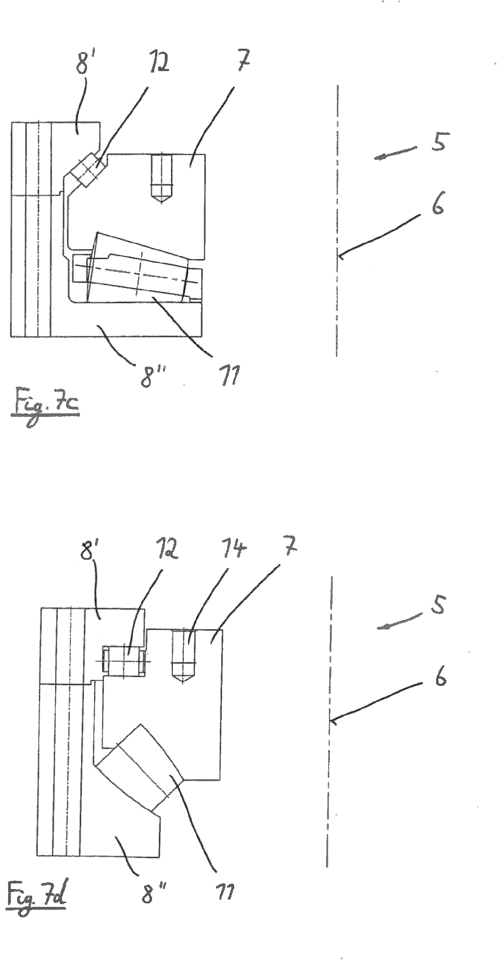

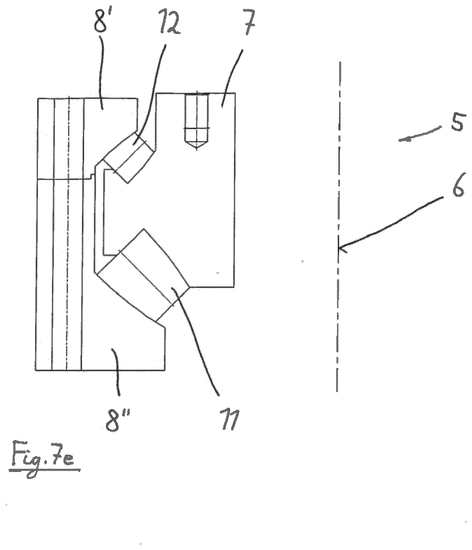

In den Figuren 6 und 7 sind verschiedene Lösungen mit (teilweise geteiltem) Lageraußenring 8, 8', 8" und einteiligem Lagerinnenring 7 skizziert, teilweise auch mit sowohl einteiligem Innenring 7 als auch einteiligem Außenring 8. Gemäß Fig. 6a ist noch einmal im wesentlichen die Lösung gemäß Fig. 3 skizziert. In Fig. 6b kommt als kombiniertes Radial- und Axiallager ein Kugellager mit den Kugeln 12 zum Einsatz, das auch als Schrägkugellager oder als Vierpunktlager ausgeführt sein kann. Die Lösung gemäß Fig. 6c ist wiederum an diejenige nach Fig. 3 angelehnt. Bei der Lösung gemäß Fig. 6d kommt sowohl ein einteiliger Lagerinnenring 7 als auch ein einteiliger Lageraußenring 8 zum Einsatz; eine entsprechende Einfüllnut für die Kugeln 12 ist daher nötig, aber nicht dargestellt. Fig. 6e ist wiederum der Lösung gemäß Fig. 3 ähnlich. Bei der Ausführungsform gemäß Fig. 6f weist der Lagerinnenring 7 eine Verzahnung 22 auf, um den Innenring 7 direkt drehanzutreiben ("top drive"-Lösung). Fig. 6g und 6h zeigen nochmals Axial-Kegelrollenlager 11 in Kombination mit Kugellagern 12.

Bei den Lösungen gemäß Fig. 7 ist der Lageraußenring 8', 8" wiederum zweigeteilt; der Lagerinnenring 7 ist einteilig. Illustriert ist wiederum, dass verschiedene Kombinationen der Lagertypen möglich sind. Als Haupt-Axiallager kommen Kegelrollenlager mit Kegelrollen 11 (Fig. 7a, 7b und 7c) bzw. Pendelrollen 11 (Fig. 7d und 7e) zum Einsatz. Die Lager mit den Wälzkörpern 12 übertragen zumeist kombiniert Axial- und Radialkräfte (Ausnahme: Fig. 7d) und sind als Zylinderrollenlager (Fig. 7a, 7b und 7d), Kegelrollenlager (Fig. 7c) oder Pendelrollenlager (Fig. 7e) ausgeführt. Der Druckwinkel der Kegelrollenlager liegt zumeist im Bereich von 45°, kann aber auch hiervon abweichen.

## Patentansprüche

1. Bohranlagen-Lageranordnung (1), die einen Grundkörper (2) mit einer Aufhängung (3) sowie eine Aufnahme (4) für ein Bohrgestänge aufweist, wobei zwischen dem Grundkörper (2) und der Aufnahme (4) für das Bohrgestänge eine Lagerung (5) angeordnet ist, um die Aufnahme (4) relativ zum Grundkörper (2) radial und axial zu lagern und das Bohrgestänge relativ zum Grundkörper mit einem Antriebmittel um eine Achse (6) zu drehen,
wobei die Lagerung (5) einen aus einem Teil bestehenden oder aus zwei Teilen zusammengesetzten Lagerinnenring (7, 7', 7") und einen aus einem Teil bestehenden oder aus zwei Teilen zusammengesetzten Lagerau-βenring (8, 8', 8") aufweist, wobei sowohl in dem Lagerinnenring (7, 7', 7") als auch in dem Lageraußenring (8, 8', 8") mindestens zwei Laufbahnen (9', 9", 9‴; 10', 10", 10‴) eingearbeitet sind, wobei mindestens zwei Reihen Wälzkörper (11, 12, 13) zwischen den Laufbahnen (9', 9", 9‴, 10', 10", 10‴) angeordnet sind, wobei eine der Reihen Wälzkörper (11) Kegelrollen oder Pendelrollen sind,
**dadurch gekennzeichnet, dass**
der Lagerinnenring (7) oder der Lageraußenring (8) einteilig ausgebildet ist und die Wälzkörper (11, 12, 13) frei von Laufbahnringen (16, 17) direkt am Lagerinnenring (7, 7', 7") und Lageraußenring (8, 8', 8") anlaufen.

2. Bohranlagen-Lageranordnung nach Anspruch 1, **dadurch gekennzeichnet, dass** eine der Reihen der Wälzkörper (11) ausschließlich zur Übertragung von in Richtung der Achse (6) wirkenden Kräften ausgebildet und angeordnet ist.

3. Bohranlagen-Lageranordnung nach Anspruch 1 oder 2, **dadurch gekennzeichnet, dass** der Lagerinnenring (7', 7") oder der Lageraußenring (8', 8") zweiteilig ausgebildet ist.

4. Bohranlagen-Lageranordnung nach einem der Ansprüche 1 bis 3, **dadurch gekennzeichnet, dass** die Lagerung (5) die einzige Lagerung der Bohranlagen-Lageranordnung ist.

5. Bohranlagen-Lageranordnung nach einem der Ansprüche 1 bis 4, **dadurch gekennzeichnet, dass** zumindest einer der Lagerringe (7, 7', 7"; 8, 8', 8") mindestens ein Gewinde (14, 15) zur Verschraubung mit einem Anbauteil aufweist.

6. Bohranlagen-Lageranordnung nach einem der Ansprüche 1 bis 5, **dadurch gekennzeichnet, dass** eine der Reihen Kegelrollen (11) so angeordnet sind, dass sie ausschließlich in Richtung der Achse (6) wirkende Kräfte übertragen können.

7. Bohranlagen-Lageranordnung nach einem der Ansprüche 1 bis 6, **dadurch gekennzeichnet, dass** eine der Reihen Wälzkörper (12) zwischen den Laufbahnen (9", 10") so angeordnet sind, dass sie sowohl axiale als auch radiale Kräfte übertragen können.

8. Bohranlagen-Lageranordnung nach Anspruch 7, **dadurch gekennzeichnet, dass** die sowohl axiale als auch radiale Kräfte übertragenden Wälzkörper (12) unter einem Winkel (α) zur Achse (6) der Lageranordnung angeordnete Zylinderrollen oder Kugeln sind.

9. Bohranlagen-Lageranordnung nach einem der Ansprüche 1 bis 8, **dadurch gekennzeichnet, dass** sowohl der Lagerinnenring (7) als auch der Lageraußenring (8) mit in Richtung der Achse (6) verlaufenden Bohrungen versehen sind, mittels derer sie an einem Anbauteil festgelegt werden können.

10. Bohranlagen-Lageranordnung nach einem der Ansprüche 1 bis 9, **dadurch gekennzeichnet, dass** der Lagerinnenring (7, 7', 7") eine Verzahnung zum Eingriff eines Antriebsritzels aufweist.

11. Bohranlagen-Lageranordnung nach einem der Ansprüche 1 bis 10, **dadurch gekennzeichnet, dass** sie als Bohrkopf ausgebildet ist, wobei ihre Drehachse (6) bei bestimmungsgemäßem Gebrauch vorzugsweise vertikal angeordnet ist.

## Claims

1. Drilling-rig bearing arrangement (1) having a main body (2) with a suspension (3) and having a receptacle (4) for a drill pipe, wherein, between the main body (2) and the receptacle (4) for the drill pipe, there is arranged a mount (5) for radial and axial mounting of the receptacle (4) relative to the main body (2) and for rotation of the drilling rig about an axis (6) relative to main body by way of a driving means,
wherein the mount (5) has a bearing inner ring (7, 7', 7"), which consists of one part or is assembled from two parts, and a bearing outer ring (8, 8', 8"), which consists of one part or is assembled from two parts, wherein at least two raceways (9', 9", 9‴, 10', 10", 10‴) are formed both in the bearing inner ring (7, 7', 7'') and in the bearing outer ring (8, 8', 8''), wherein at least two rows of rolling bodies (11, 12, 13) are arranged between the raceways (9', 9" , 9‴, 10', 10'', 10‴), wherein one of the rows of rolling bodies (11) is tapered rollers or pendulum rollers,
**characterized in that**
the bearing inner ring (7) or the bearing outer ring (8) is of one-part form, and the rolling bodies (11, 12, 13) free of raceway rings (16, 17) run directly on the bearing inner ring (7, 7', 7'') and bearing outer ring (8, 8', 8").

2. Drilling-rig bearing arrangement according to Claim 1, **characterized in that** one of the rows of rolling bodies (11) is configured and arranged exclusively for transmitting forces that act in the direction of the axis (6).

3. Drilling-rig bearing arrangement according to Claim 1 or 2, **characterized in that** the bearing inner ring (7', 7") or the bearing outer ring (8', 8'') is of two-part form.

4. Drilling-rig bearing arrangement according to one of Claims 1 to 3, **characterized in that** the mount (5) is the only mount of the drilling-rig bearing arrangement.

5. Drilling-rig bearing arrangement according to one of Claims 1 to 4, **characterized in that** at least one of the bearing rings (7, 7', 7'', 8, 8', 8'') has at least one thread (14, 15) for screw-connection to an attachment part.

6. Drilling-rig bearing arrangement according to one of Claims 1 to 5, **characterized in that** one of the rows of tapered rollers (11) is arranged in such a way that they can transmit exclusively forces that act in the direction of the axis (6).

7. Drilling-rig bearing arrangement according to one of Claims 1 to 6, **characterized in that** one of the rows of rolling bodies (12) is arranged between the raceways (9' ' , 10") in such a way that they can transmit both axial and radial forces.

8. Drilling-rig bearing arrangement according to Claim 7, **characterized in that** the rolling bodies (12) that transmit both axial and radial forces are cylinder rollers or balls arranged at an angle (α) to the axis (6) of the bearing arrangement.

9. Drilling-rig bearing arrangement according to one of Claims 1 to 8, **characterized in that** both the bearing inner ring (7) and the bearing outer ring (8) are provided with bores which extend in the direction of the axis (6) and by means of which they can be fixed to an attachment part.

10. Drilling-rig bearing arrangement according to one of Claims 1 to 9, **characterized in that** the bearing inner ring (7, 7', 7'') has a toothing for engagement with a drive pinion.

11. Drilling-rig bearing arrangement according to one of Claims 1 to 10, **characterized in that** said drilling-rig bearing arrangement is in the form of a drill head, wherein the axis of rotation (6) thereof is preferably positioned vertically during intended use.

## Revendications

1. Agencement de palier pour installations de forage (1), qui comprend un corps de base (2) muni d'une suspension (3), ainsi qu'un logement (4) pour un train de tiges, un palier (5) étant agencé entre le corps de base (2) et le logement (4) pour le train de tiges, afin de supporter radialement et axialement le logement (4) par rapport au corps de base (2) et de faire tourner le train de tiges par rapport au corps de base avec un moyen d'entraînement autour d'un axe (6),
le palier (5) comprenant un anneau intérieur de palier (7, 7', 7'') constitué d'une partie ou composé de deux parties et un anneau extérieur de palier (8, 8', 8'') constitué d'une partie ou composé de deux parties, au moins deux voies de déplacement (9', 9", 9‴ ; 10', 10", 10''') étant pratiquées aussi bien dans l'anneau intérieur de palier (7, 7', 7'') que dans l'anneau extérieur de palier (8, 8', 8''), au moins deux séries de corps de roulement (11, 12, 13) étant agencées entre les voies de déplacement (9', 9'', 9‴ ; 10', 10'', 10'''), une des séries de corps de roulement (11) étant des rouleaux coniques ou des rouleaux à rotule sur rouleaux,
**caractérisé en ce que**
l'anneau intérieur de palier (7) ou l'anneau extérieur de palier (8) est configuré en une partie et les corps de roulement (11, 12, 13) démarrent directement sur l'anneau intérieur de palier (7, 7', 7'') et l'anneau extérieur de palier (8, 8', 8") sans anneaux de voie de déplacement (16, 17).

2. Agencement de palier pour installations de forage selon la revendication 1, **caractérisé en ce qu'**une des séries de corps de roulement (11) est configurée et agencée exclusivement pour le transfert de forces agissant en direction de l'axe (6).

3. Agencement de palier pour installations de forage selon la revendication 1 ou 2, **caractérisé en ce que** l'anneau intérieur de palier (7', 7") ou l'anneau extérieur de palier (8', 8'') est configuré en deux parties.

4. Agencement de palier pour installations de forage selon l'une quelconque des revendications 1 à 3, **caractérisé en ce que** le palier est le seul palier de l'agencement de palier pour installations de forage.

5. Agencement de palier pour installations de forage selon l'une quelconque des revendications 1 à 4, **caractérisé en ce qu'**au moins un des anneaux de palier (7, 7', 7" ; 8, 8', 8'') comprend au moins un filetage (14, 15) pour le vissage avec une partie de montage.

6. Agencement de palier pour installations de forage selon l'une quelconque des revendications 1 à 5, **caractérisé en ce qu'**une des séries de rouleaux coniques (11) sont agencés de telle sorte qu'ils puissent transférer exclusivement des forces agissant en direction de l'axe (6).

7. Agencement de palier pour installations de forage selon l'une quelconque des revendications 1 à 6, **caractérisé en ce qu'**une des séries de corps de roulement (12) sont agencés entre les voies de déplacement (9'', 10'') de telle sorte qu'ils puissent transférer aussi bien des forces axiales que radiales.

8. Agencement de palier pour installations de forage selon la revendication 8, **caractérisé en ce que** les corps de roulement (12) transférant aussi bien des forces axiales que radiales sont des rouleaux cylindriques ou des billes agencés à un angle (α) par rapport à l'axe (6) de l'agencement de palier.

9. Agencement de palier pour installations de forage selon l'une quelconque des revendications 1 à 8, **caractérisé en ce qu'**aussi bien l'anneau intérieur de palier (7) que l'anneau extérieur de palier (8) sont munis d'alésages s'étendant en direction de l'axe (6), au moyen desquels ils peuvent être fixés sur une partie de montage.

10. Agencement de palier pour installations de forage selon l'une quelconque des revendications 1 à 9, **caractérisé en ce que** l'anneau intérieur de palier (7, 7', 7") comprend une denture pour l'engagement d'un pignon d'entraînement.

11. Agencement de palier pour installations de forage selon l'une quelconque des revendications 1 à 10, **caractérisé en ce qu'**il est configuré sous la forme d'une tête de forage, son axe de rotation (6) étant de préférence agencé verticalement lors de l'utilisation prévue.
